# EUROPEAN PATENT APPLICATION

(11) **EP 0 933 775 A2**
(43) Date of publication of application: **04.08.1999**
(21) Application number: 99300396.1
(22) Date of filing: 20.01.1999
(51) Int. Cl.: G11B 27/034

(54) **Data compression and decompression system and a method used therefor**

(30) Priority: 27.01.1998 JP 1364998
(71) Applicant: Canopus Co., Ltd., Kobe-shi, Hyogo 651-2241 (JP)
(72) Inventor: Fujioka, Yoshihide, c/o CANOPUS CO., LTD., Kobe-shi, Hyogo 651-2241 (JP)
(74) Representative: Beresford, Keith Denis Lewis

(57) **Abstract**

A CPU 23 performs a program 36c for selecting either of using hardware or software for carrying out data compression/decompression when a data compression command is generated during execution of a program 26v for editing video. The data compression is carried out with a DV capturing board 41 under the control of the CPU 23. The program 36c is further performed with the CPU 23 when another data decompression command is generated during execution of the program 26v. In the program 36c, the data decompression is carried out in accordance with the program 36a by the CPU 23. It is therefore not necessary to initialize the board 41 by carrying out the data compression and the data decompression respectively with the hardware and the software.

## Description

### Cross-Reference to Related Application

The entire disclosure of Japanese Patent Application No. Hei 10-013649 filed on January 27, 1998 including specification, claims, drawings, and summary is incorporated herein by reference in its entirety.

### BACKGROUND OF INVENTION

### 1. Field of the Invention

This invention relates to a method for compressing and decompressing data utilizing a computer, more specifically, to a method for increasing an overall processing speed thereof.

### 2. Description of the Prior Art

Recently, nonlinear DV (digital video) editing is becoming more popular compared to conventional video editing. Nonlinear DV editing is a method for editing video signals, in which DV signals are stored into a hard disk (HDD) of the computer through a video capturing board and editing the DV signals by fetching desired frame(s) from the stored signals.

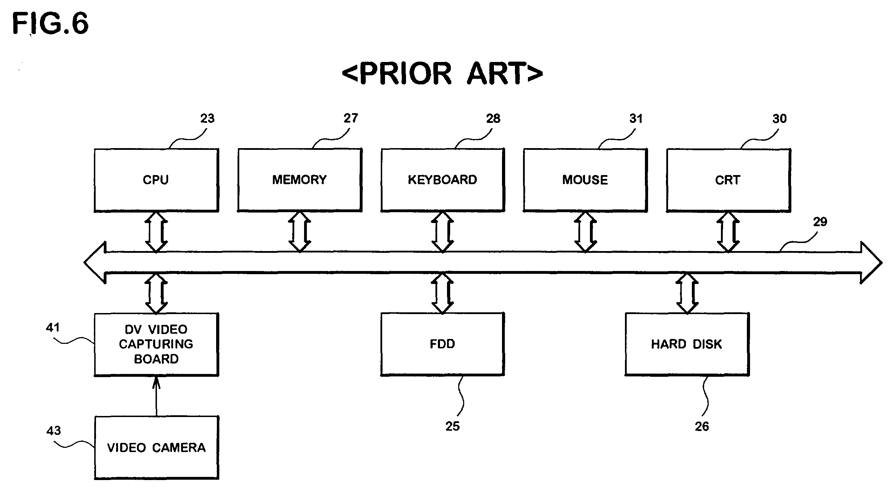

Fig. 6 shows a hardware structure of a computer system which carries out nonlinear DV editing. A digital video capturing board (hereinafter referred to as DV capturing board) 41 converts analog image data provided by a video camera 43 into digital image data for every frame, and the resulting data are compressed thereby into a digital video format. The compressed data are stored in a hard disk 26 under one frame basis by the control of a CPU 23. Thus, the image data to be edited are stored in the hard disk 26 under the one frame basis in a compressed manner.

A command for reading out specific data is entered through either a keyboard 28 or a mouse 31 by an operator of the system. On receipt of the command, the CPU 23 switches operation modes of the DV capturing board 41 into decompression mode. Data of the specified frame(s) are read out from the hard disk 26, and that are provided to the Din capturing board 41. The DV video capturing board 41 carries out decompression of the data thus provided thereto. The decompressed data are stored in a memory 27 by the control of the CPU 23. The data stored in the memory 27 are read out and displayed on a cathode ray tube (hereinafter referred to as CRT) 30 under the control of the CPU 23. As a result, the image data to be edited can be displayed on the CRT 30 under the one frame basis.

Desired editing work such as insertion of a title of the video, composition of the images is carried out to the specified frame with referring to the frames displayed on the CRT 30 by the operator. On completing the editing of the specified frame, the operator inputs a command for writing the edited frame by operating either the keyboard 28 or the mouse 31. On receipt of the command, the image data of the frame thus edited are stored in the memory 27 under the control of the CPU 23. The CPU 23 switches the operation modes of the DV capturing board 41 to a compression mode. The data of the specified frame(s) are read out from the memory 27, and that are provided to the DV capturing board 41. The DV capturing board 41 carries out compression of the data thus provided thereto. The compressed data are stored in the hard disk 26 by the control of the CPU 23.

Thus, the edited image data can be stored in the hard disk 26 by repeatedly carrying out data compression/decompression with the DV capturing board 41.

The nonlinear DV editing described above, however has the following problem to be resolved.

Generally, a dedicated hardware is used for carrying out data compression/decompression in order to increase processing speed of the data processing. However, repeated data compression/decompression such as nonlinear DV editing make the time period required for initializing the hardware longer than usual.

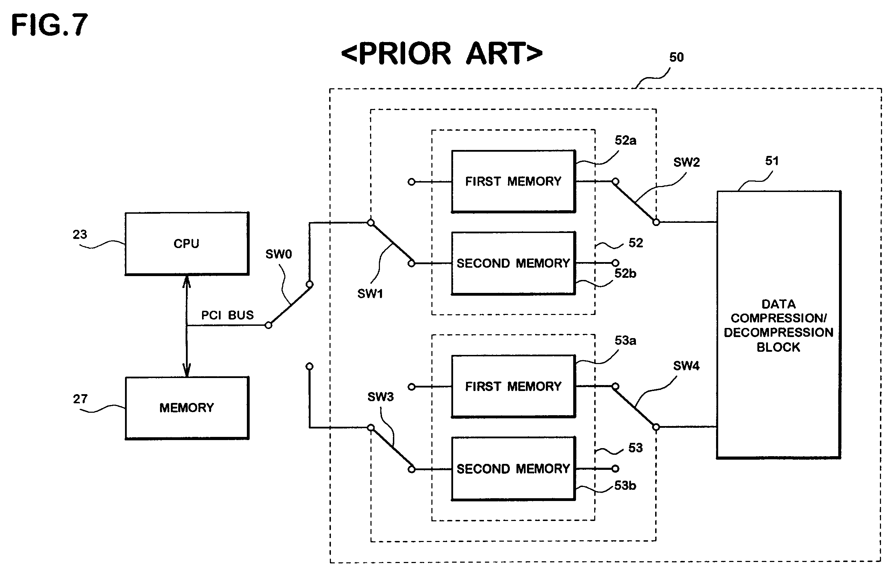

The problem related with the initialization of the hardware will be described herein referring to Fig. 7. A processor 50 for carrying out data compression/decompression of the DV capturing board 41 is shown in Fig. 7. The processor 50 has a data compression/decompression block 51 and first-in first-out memories (hereinafter referred to as FIFO memories) 52, 53. In order to match the timing of data transmission of the block 51 with that of the CPU 23, the FIFO memories 52, 53 are provided as buffer memories. Because the block 51 and the CPU 23 are operated independently with each other. The FIFO memory 52 includes a first memory 52a and a second memory 52b both respectively having capabilities of storing one frame of uncompressed image data. Also, the other FIFO memory 53 comprises a first memory 53a and a second memory 53b both respectively having capabilities of storing one frame of compressed image data.

In the FIFO memory 52, the first-in first-out processing can be carried out by controlling a switch sw1 and a switch sw2 so as to link with each other. This is similar to the FIFO memory 53. For instance, one frame of uncompressed image data provided by the CPU 23 are stored in the first memory 52a when the switch sw1 and the switch sw2 are connected respectively to the first memory 52a and the second memory 52b. On completing transmission of the one frame of uncompressed image data, both the switch sw1 and the switch sw2 are switched so as to connect respectively with the second memory 52b and the first memory 52a. In this example, both the switch sw1 and the switch sw2 are switched in 33 milliseconds because length of one frame is 33 milliseconds. The data compression/decompression block 51 reads out the one frame of uncompressed image data stored in the first memory 52a, and performs data compression of the image data. Thereafter, the block 51 controls to store the compressed image data either the first memory 53a or the second memory 53b. The compressed image data are stored in the first memory 53a when the processor 50 is in the condition shown in Fig. 7. Similar to above, both a switch sw4 and a switch sw3 are switched so as to connect respectively with the second memory 53b and the first memory 53a after completing transmission of the one frame of the compressed image data. Then, the CPU 23 controls another switch sw0 so as to read out the compressed image data stored in the first memory 53a. The data thus read out are stored in the memory 27 under the control of the CPU 23.

Further, the operation modes of the DV capturing board 41 are turned into either the compression mode or the decompression mode by making the data flow in the opposite direction. In practical, the image data from the CPU 23 are provided to the FIFO memory 52, and the compressed data from the FIFO memory 53 are received by switching the switch sw0 in the compression mode. On the other hand, the image data from the CPU 23 are provided to the FIFO memory 53, and the decompressed data from the FIFO memory 52 are received in the decompression mode.

The switch sw0 is switched with a codec driver (not shown) which controls the DV capturing board 41.

As described above, it is possible to match the timing of data transmission of the block 51 with that of the CPU 23 by providing both the FIFO memories 52, 53. However, at least a duration of two frames is required for performing data processing through the processor 50. Because a duration of one frame is needed to transmit the data from the CPU to the block, and another duration of one frame is required for transmitting the processed data from the block to the CPU. In other words, the CPU receives the processed data in the duration of two frames after outputting unprocessed data therefrom. Although, initial data processing is completed in the duration of two frames, less influence is expected to overall processing time when either one of the data compression or data decompression is sequentially carried out. A duration of three frames is required for performing data processing through the processor 50 even when data processing at the block can be carried out in generally real-time basis in the case of carrying out both the data compression and data decompression with the processor.

In order to resolve the problem described above, both data compression/decompression can also be performed with a computer software (hereinafter referred to as software) without using the DV capturing board 41. However, the processing speed is considerably decreased when a computer having lower processing capabilities is used for the data processing. Particularly, high capabilities are required for performing the data compression than that of the data decompression.

The problem described above may be observed not only in the nonlinear video editing, but also in other cases of repeatedly carrying out data compression/decompression.

### SUMMARY OF THE INVENTION

It is an object of the present invention to provide a nonlinear video editing system capable of performing the nonlinear video editing at a higher speed depending upon processing capabilities of the computer to be used, and to overcome the above problems associated with prior art video capturing board.

It is another object of the present invention to provide a data compression/decompression system capable of carrying out both data compression/decompression at a high speed depending upon the processing capabilities of the computer to be used, and to overcome the above problems associated with prior art video capturing board.

In accordance with the present invention, there is provided an image data compression/decompression system and an image data compression/decompression method comprising the steps of storing a program for carrying out compression and the decompression of provided image data, and switching one of following processing modes. 1) a first mode for carrying out both the compression and the decompression of the provided image data with a data compression/decompression board, 2) a second mode for respectively carrying out the compression of the provided image data with the board, and the decompression of compressed data in accordance with the program, and 3) a third mode for carrying out both the compression and the decompression of the provided image data in accordance with program.

Also, in accordance with the present invention, there is provided an image data compression/decompression system and a method used therefor comprising the steps of storing information which is used to select one of the board or the program for carrying out the compression or the decompression of the provided image data, and carrying out one of both the compression and the decompression of the provided image data, and either the compression or the decompression of the provided image data using the program in accordance with the setting information.

Further, in accordance with the present invention, there is provided an image data compression/decompression system and a method used therefor comprising the step of connecting an image data compression board carrying out the compression of the provided image data to the computer, storing a program for carrying out the compression of the provided image data, providing the image data to the image data compression board when input of image data for compression is detected, and operating the computer under the compression program when input of image data for decompression is detected.

Still further, in accordance with the present invention, there is provided an image data compression/decompression method comprising the step of storing a program for carrying out the compression and the decompression of the provided image data, and carrying out both the compression and the decompression of the provided image data, or either the compression or the decompression of the provided image data using the program.

While the novel features of the invention are set forth in a general fashion, both as to organization and content, it will be better understood and appreciated, along with other objects and features thereof, from the following detailed description taken in conjunction with the drawings.

### BRIEF DESCRIPTION OF THE DRAWINGS

Fig. 1 is a block diagram illustrating a hardware structure of a nonlinear video editing system 1 in accordance with the present invention.
Fig. 2 is a table illustrating a variety of combination between hardware and software for carrying out data compression/decompression.
Fig. 3 is a conceptual view illustrating a relationship between the hardware and the software.
Fig. 4 is a flow chart illustrating steps of a program for selecting either of using the hardware or the software.
Fig. 5 is a flow chart illustrating steps of a program for determining an appropriate combination.
Fig. 6 is a block diagram illustrating a hardware structure of a conventional nonlinear video editing system.
Fig. 7 is a detailed partial view illustrating a hardware structure of a conventional DV video capturing board.

### THE BEST MODE OF EMBODIMENTS FOR CARRYING OUT THE PRESENT INVENTION

### 1. HARDWARE STRUCTURE

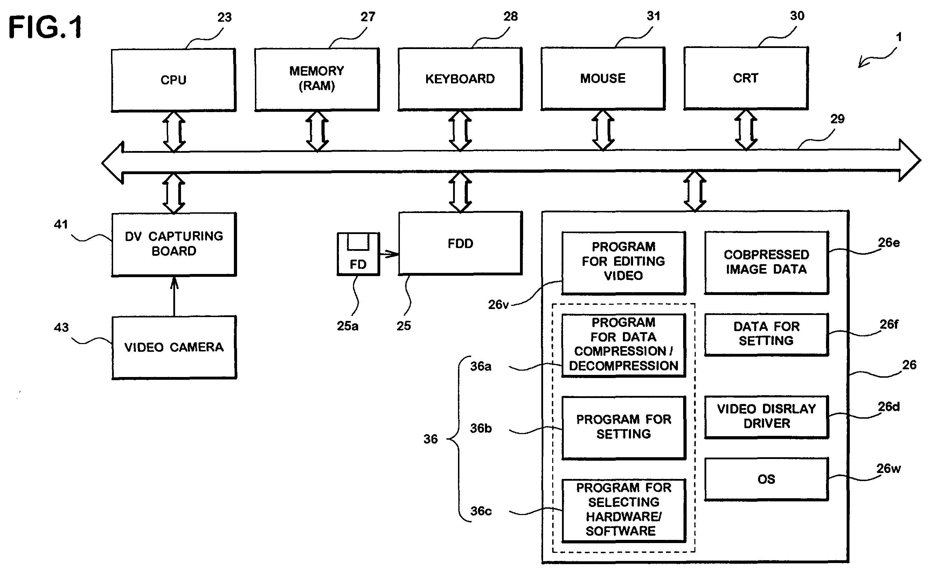

An embodiment of the present invention will be described herein referring to the drawings. Fig. 1 shows a hardware structure of a nonlinear video editing system 1 using a data compression/decompression apparatus in accordance with the present invention. The nonlinear video editing system 1 comprises a CPU 23, a memory (random access memory) 27, a hard disk 26, a CRT 30, a flexible disk drive (hereinafter referred to as FDD) 25, a keyboard 28, a mouse 31, a DV capturing board 41, and a bus line 29.

The CPU 23 controls other parts through the bus line 29 in accordance with a control program stored in the hard disk 26. The control program is a program which is installed in the hard disk 26 by reading out from flexible disk(s) 25a through the FDD 25. The control program can also be installed in the hard disk 26 from a computer readable media substantially incorporated with program(s) stored in CD-ROMs, IC cards or the like, beside the flexible disk(s). Further, the control program can be downloaded through a communication line.

In this embodiment, the control program stored in the flexible disk(s) is executed indirectly on the computer terminal by installing the control program in the hard disk 26 from the flexible disk(s). But it is not limited to do that, the control program stored in the flexible disk(s) can be executed directly on the computer through the FDD 25. The control program which can be executed by the computer in this embodiment is not only the control program itself being executed directly on the computer by installing under as is condition, but the control program in the embodiments described herein also includes a control program which need to be converted into other form such as decompressed data and so on as well as a control program which can be executed on the computer which combines with other modules such as operating systems or a library.

A program 26v for editing video, compressed image data 26e, data 26f for setting, a codec driver 36, a video display driver 26d, and an operating system (OS) 26w are stored in the hard disk 26. In this embodiment, Windows 95 and Video for Windows both of Microsoft Corp. are respectively used as the operating system and the video display driver. Description of the program 26v for editing video is omitted, because the program 26v is the same as a program used in the conventional system. Further, the compressed image data 26e are the data stored through the DV capturing board 41 similar to conventional system.

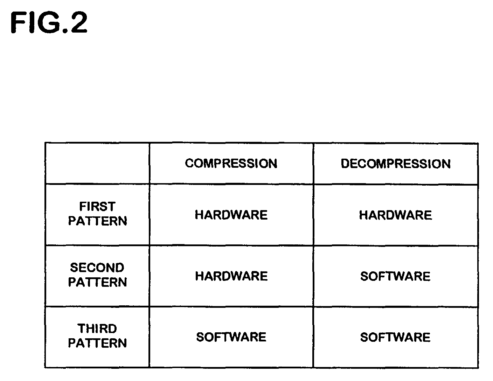

The data 26f are data for selecting selection modes of a program 36c for selecting hardware/software. In practice, data of a pattern out of three selection modes (from a first pattern to a third pattern) illustrated on the table shown in Fig. 2 are stored as the data 26f. The first pattern is a pattern for carrying out data compression with the hardware, and data decompression with the software. The second pattern is a pattern for carrying out data compression with the hardware, and data decompression with the software. And the third pattern is a pattern for carrying out both data compression and decompression with the hardware.

The codec driver 36 includes a program 36a for data compression/decompression, a program 36b for setting, and the program 36c for selecting hardware/software.

The program 36a is a program for carrying out data compression/decompression in digital form. Also, the program 36b is a program for rewriting the data 26f. Further, the program 36c is a program for selecting the use of either the hardware or the software for carrying out the data compression/decompression in accordance with the data 26f.

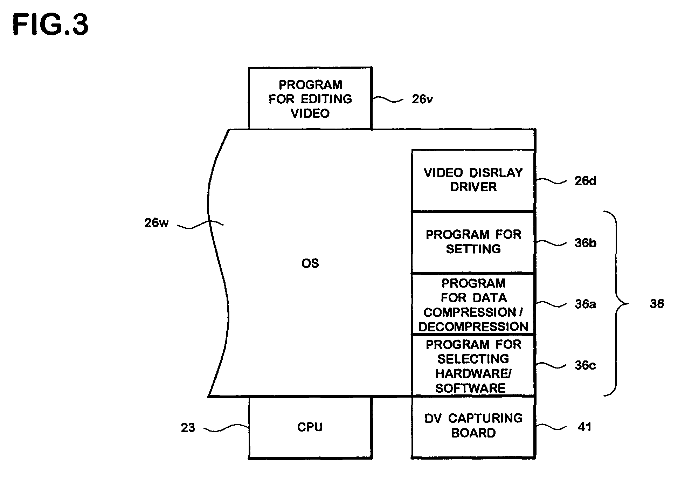

Fig. 3 is a conceptual view illustrating a relationship among each of the programs, the operating system, each of the drivers, and the hardware to be controlled. The program 26v is an application program operated on the operating system 26w. The codec driver 36 is a driver conceptually positioned between the DV capturing board 41 and the program 26v.

Various calculation results or other data are stored in the memory 27. Images to be edited are displayed on the CRT 30 under the one frame basis. Both the keyboard 28 and the mouse 31 forms input means for inputting various commands (such as edit starting command, edit terminating command).

### 2. FLOW CHART

### 2.1) Flow chart of the program 36c for selecting hardware/software

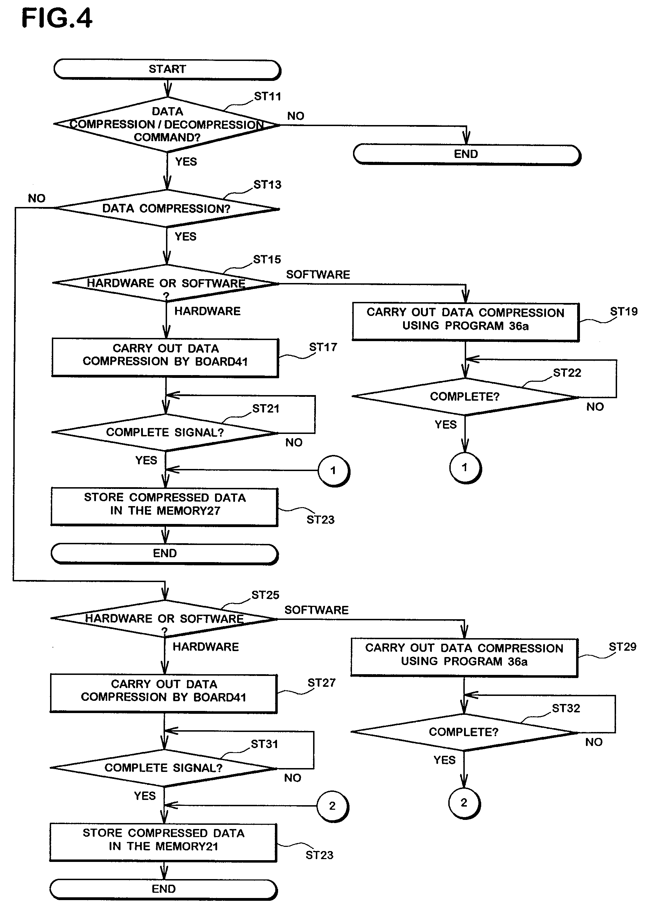

Details of the program 36c stored in the hard disk 26 will be described herein referring to Fig. 4.

The CPU 23 judges whether or not both image data to be edited and a data compression/decompression command are entered during execution of the program 26v (step ST11). The data compression/decompression command is generated by carrying out edit of any image of the compressed image data 26e.

The program 36c will be terminated when none of the data compression/decompression command is entered.

On the other hand, the CPU 23 recognizes that the command thus entered is either the compression command or the decompression command (step ST13). Determination of using either the hardware or the software for carrying out data compression is made by reading out the data 26f shown in Fig. 1 when the compression command is entered (step ST15). For instance, the CPU 23 determines that the data compression and the data decompression are respectively carried out with the hardware and with the software when the second pattern is selected.

Both the compression command and image data to be compressed are provided to the DV capturing board 41 when the pattern (such as the first pattern or the second pattern shown in Fig. 2) being selected carries out the data compression with the hardware (step ST17). As a result, the data compression is carried out with the hardware. The CPU 23 judges whether or not receiving a process completion signal from the DV capturing board 41 (step ST21), and the image data compressed by the board 41 are stored in the memory 27 when the process completion signal is received (step ST23). Further, the CPU 23 itself carries out the data compression by executing the program 36a when the pattern (such as the third pattern shown in Fig. 2) being selected carries out the data compression with the software at the step ST15 (step ST19). The image data thus compressed are stored in the memory 27 upon completion of the data compression detected by the CPU 23 (step ST23).

Determination of using either the hardware or the software for carrying out data decompression is made by reading out the data 26f shown in Fig. 1 when the decompression command is entered at the step ST13 (step ST25). Both the compression command and image data to be decompressed are provided to the DV capturing board 41 when the pattern (such as the first pattern shown in Fig. 2) being selected carries out the data decompression with the hardware (step ST27). As a result, the data decompression is carried out with the hardware. The CPU 23 judges whether or not receiving the process completion signal from the DV capturing board 41 (step ST31), and the image data decompressed by the board 41 are stored in the memory 27 when the process completion signal is received (step ST33). Further, the CPU 23 itself carries out the data decompression by executing the program 36a when the pattern (such as the second pattern or the third pattern shown in Fig. 2) being selected at the step ST25 carries out the data decompression with the software (step ST29). The image data thus decompressed are stored in the memory 27 upon completion of the data decompression detected by the CPU 23 (step ST33).

Thus, both the data compression/decompression are carried out by using the hardware and the software in accordance with the data 26f.

### 2.2) Flowchart of the program 36b for setting

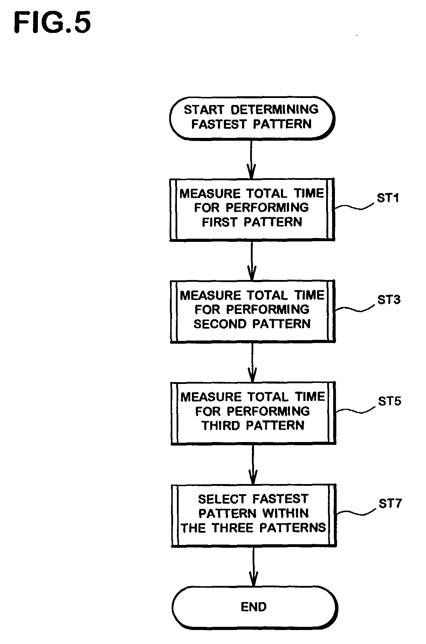

Details of the program 36b stored in the hard disk 26 will be described herein referring to Fig. 5. The program 36b is a program for determining the fastest possible pattern for carrying out both data decompression and the data compression within the three patterns shown in Fig. 2. The determination of the fastest possible pattern is made by measuring and comparing total times of the three patterns consumed for performing decompression of image data which are once compressed. In order to simplify the measurement, a total time of the procedures is defined as a time for performing the procedures in predetermined times.

The total time for performing the procedures of the first pattern shown in Fig. 2 is measured by the CPU 23 (Fig. 5, step ST1). Actually, the data 26f is revised to another data (the first pattern) which carries out both the data compression and the data decompression with the hardware. Then, both decompression of any one frame of image data stored in the compressed image data, and compression of the decompressed data are carried out with the DV capturing board 41 in accordance with the program 36c. In this case, initialization of the DV capturing board 41 in the conventional system need to be carried out because the board 41 is used for performing both the data compression and decompression.

The total time measured by carrying out the procedures of the first pattern in the predetermined times is recorded in the memory (RAM) 27.

Other total time for performing the procedures of the second pattern shown in Fig. 2 is measured by the CPU 23 (Fig. 5, step ST3). Actually, the data 26f is revised to another data (the second pattern) which carries out the data compression with the hardware and the data decompression with the software. Then, the program 36c is performed by the CPU 23. As a result, the decompression of any one frame of image data stored in the compressed image data is carried out with the CPU 23 in accordance with the program 36a. Thereafter, the decompressed image data are provided to the board 41 and that is compressed thereat under the control of the CPU 23. In this case, no initialization of the DV capturing board 41 in the conventional system is required because the board 41 is used only for performing the compression. However, the use of the CPU 23 for carrying out the data decompression require a longer time than that of the block 51 (see Fig. 7).

The total time measured by carrying out the procedures of the second pattern in predetermined times is also recorded in the RAM 27.

Other total time for performing the procedures of the third pattern shown in Fig. 2 is measured by the CPU 23 (Fig. 5, step ST5). Actually, the data 26f is revised to another data (the third pattern) which carries out both the data compression and the data decompression with the software. Then, the program 36c is carried out by the CPU 23. As a result, the decompression of any one frame of image data stored in the compressed image data is carried out with the CPU 23 in accordance with the program 36a. Thereafter, the decompressed image data are compressed with the CPU 23 in accordance with the program 36c. In this case, no initialization of the DV capturing board 41 in the conventional system is required because no DV video capturing board 41 is used. However, the use of the CPU 23 for carrying out both the data decompression and decompression require a longer time than that of the block 51 (see Fig. 7).

The total time measured by carrying out the procedures of the third pattern in predetermined times is also recorded in the RAM 27.

Next, the fastest possible pattern for carrying out both the data decompression and the data compression is selected within the three patterns by carrying out a comparison of the total times among the patterns stored in the RAM 27 with the CPU 23, and the pattern thus selected is written as the data 26f (step ST7). As a result, the data compression/decompression can be carried out as fast as possible depending upon the processing capabilities of the computer even when the FIFO memories (forming a first-in first-out memory) are used for matching the timing of data transmission between the CPU 23 and the board both of which are operated asynchronously with each other. In other words, the data compression/decompression can be carried out as fast as possible depending upon the capabilities of the computer connected to the hardware even when the hardware required initial settings for carrying out the compression/decompression as well as consuming much time for the settings.

As described above, the CPU 23 performs the program 36c when the data compression command is generated during execution of the program 26v in this embodiment. As a result of performing the program 36c, the data compression is carried out with the DV capturing board 41 under the control of the CPU 23. The program 36c is further performed with the CPU 23 when another data decompression command is generated during execution of the program 26v. In the program 36c, the data decompression is carried out in accordance with the program 36a by the CPU 23. It is therefore not necessary to initialize the board 41 by carrying out the data compression and the data decompression respectively with the hardware and the software. As a result, the data compression/decompression can be carried out as fast as possible depending upon the performance of the computer being used therefor.

### 3. OTHER EMBODIMENTS

The data compression and the data decompression are carried out respectively with the hardware and the software in above embodiment. This is because high capabilities are required for performing the data compression than that of the data decompression. The present invention is not limited to do that, a fourth pattern for respectively carrying out the data compression and the data decompression with the software and the hardware can be added to the data 26f.

Although, the three patterns are used for performing the program 36b in order to select the fastest possible pattern for carrying out both data decompression and the data compression in the embodiment above, any other method(s) can be used to determine the fastest possible pattern depending upon the processing capabilities of the computer being used. For instance, an appropriate pattern may be selected within a table which stores various patterns depending upon the processing capabilities of the computer by evaluating the capabilities with its operating system.

Further, a pattern out of the various patterns displayed on the CRT 30 may be selected by the operator. In that case, a recommended pattern evaluated depending upon the processing capabilities of the CPU may be displayed on the CRT 30 as an appropriate selection.

An image data compression/decompression method in the present invention can be considered as a method comprises the steps of storing a program for carrying out the compression and the decompression of the provided image data, storing setting information for determining the use of either the board or the program for carrying out the compression or the decompression of the provided image data, and carrying out both the compression and the decompression of the provided image data, or either the compression or the decompression of the provided image data using the program in accordance with the setting information.

Also, an image data compression/decompression method in the present invention can be considered as a method performing compression and decompression of image data using a computer comprises the steps of connecting an image data compression board carrying out the compression of the provided image data to the computer, storing a program for carrying out the compression of the provided image data, providing the image data to the image data compression board when input of image data for compression is detected, and operating the computer under the compression program when input of image data for decompression is detected.

Although, both the data compression/decompression are carried out by using a DV format in the embodiment described above, any other method(s) capable of carrying out the data compression/decompression such as Motion-Joint Photographic Experts Group (M-JPEG) or the like in Discrete Cosine Transform (DCT) or other method than DCT such as vector quantize or the like can be used.

Further, the present invention is applied to the nonlinear video editing system in the embodiments described above. But it is not limited to apply the present invention for the nonlinear video editing system. The present invention can also be applied to any other system(s) repeatedly carrying out data compression/decompression.

An image data compression/decompression system and an method thereof in the present invention comprise the steps of storing a program for carrying out compression and the decompression of provided image data, and switching one of following processing modes. 1) a first mode for carrying out both the compression and the decompression of the provided image data with a data compression/decompression board, 2) a second mode for respectively carrying out the compression of the provided image data with the board, and the decompression of compressed data in accordance with the program, and 3) a third mode for carrying out both the compression and the decompression of the provided image data in accordance with program. Therefore, an appropriate mode out of the processing modes can be selected depending upon the processing capabilities of the computer connecting the board.

Also, an image data compression/decompression system in the present invention includes means for determining one of the processing modes, and means for automatically determining one of the processing modes, the processing mode thus determined capable of carrying out the mode in a shortest time period within the time periods measured by performing both the compression and the decompression when image data for testing are provided at each of the three processing modes. Therefore, the processing mode capable of carrying out both data decompression and the data compression in the shortest time period can be selected automatically without carrying out any selection by the operator.

Further, an image data compression/decompression system and a method thereof in the present invention comprise the steps of storing a program for carrying out the compression and the decompression of the provided image data, storing setting information for determining the use of one of the board and the program for carrying out one of the compression and the decompression of the provided image data, and carrying out one of both the compression and the decompression of the provided image data, and either the compression or the decompression of the provided image data using the program in accordance with the setting information. Therefore, no initial settings for carrying out both the compression and the decompression of the provided image data in the board is required. As a result, an overall processing speed can be improved in the case of repeatedly carrying out both the compression and the decompression.

Still further, an image data compression/decompression system in the present invention is characterized in that, the setting information is changed with the means for changing thereof. Therefore, an appropriate mode out of the processing modes can be selected depending upon the processing capabilities of the computer connecting the board.

An image data compression/decompression system and a method thereof comprise the steps of connecting an image data compression board carrying out the compression of the provided image data to the computer, storing a program for carrying out the compression of the provided image data, providing the image data to the image data compression board when input of image data for compression is detected, and operating the computer under the compression program when input of image data for decompression is detected. The data compression and the decompression respectively carried out with the hardware and the software allows the system and the method to improve an overall processing speed in the case of using a computer having higher processing capabilities for repeatedly carrying out the data compression/decompression, unlike to the conventional system which requires the initial settings.

Also, an image data compression/decompression method in the present invention comprises the steps of storing a program for carrying out the compression and the decompression of the provided image data, and carrying out one of both the compression and the decompression of the provided image data, and either the compression or the decompression of the provided image data using the program. The data compression and the decompression respectively carried out with the hardware and the software allows the method to improve an overall processing speed in the case of using a computer having higher processing capabilities for repeatedly carrying out the data compression/decompression unlike to the conventional system which requires the initial settings.

While the invention has been described in its preferred embodiments, it is to be understood that the words which have been used are words of description rather than limitation and that changes within the purview of the appended claims may be made without departing from the true scope and spirit of the invention in its broader aspects.

## Claims

1. An image data compression/decompression system for carrying out compression and decompression of image data by connecting a data compression/decompression board to a computer, the board carrying out the compression and the decompression of provided image data, the system comprising:
A) means for storing a program capable of carrying out the compression and the decompression of the provided image data,
B) image data compression/decompression means for carrying out the compression and the decompression of provided image data, the image data compression/decompression means capable of being switched into one of following processing modes,
b1) a first mode for carrying out both the compression and the decompression of the provided image data with the data compression/decompression board,
b2) a second mode for respectively carrying out the compression of the provided image data with the board, and the decompression of compressed data in accordance with the program,
b3) a third mode for carrying out both the compression and the decompression of the provided image data in accordance with the program, and
C) switching means for switching the image data compression/decompression means into one of the processing modes.

2. The system in accordance with claim 1, wherein the switching means includes;
1) means for selecting one of the processing modes by an operator of the system, and
2) means for determining one of the processing modes based on the selection of the operator.

3. The system in accordance with claim 1, wherein the switching means includes;
1) means for automatically determining one of the processing modes, the processing mode thus determined capable of carrying out the mode in a shortest time period within the time periods measured by performing both the compression and the decompression when image data for testing are provided at each of the three processing modes, and
2) means for determining one of the processing modes based on the determination of the determining means.

4. An image data compression/decompression system for carrying out compression and decompression of image data by connecting a data compression/decompression board to a computer, the board carrying out the compression and the decompression of provided image data, the system comprising:
means for storing a program which carries out the compression and the decompression of the provided image data,
means for storing information which is used to select one of the board and the program for carrying out one of the compression and the decompression of the provided image data, and
means for carrying out one of both the compression and the decompression of the provided image data, and either the compression or the decompression of the provided image data using the program in accordance with selecting information.

5. The system in accordance with claim 4, wherein the system further includes means for changing the setting information stored in the means for storing selecting information.

6. An image data compression/decompression system for carrying out compression and decompression of image data using a computer comprising:
an image data compression board carrying out the compression of the provided image data, the board connected to the computer, and
means for storing a program which compress the provided image data,
wherein the computer provides the image data to the image data compression board when input of image data for compression is detected, and the computer is in operation under the compression program when input of image data for decompression is detected.

7. An image data compression/decompression method for carrying out compression and decompression of image data by connecting a data compression/decompression board to a computer, the board carrying out the compression and the decompression of provided image data, the method comprising the steps of:
A) storing a program for carrying out compression and the decompression of the provided image data, and
B) making the computer capable of being switched into one of following processing modes,
b1) a first mode for carrying out both the compression and the decompression of the provided image data with the data compression/decompression board,
b2) a second mode for respectively carrying out the compression of the provided image data with the board, and the decompression of compressed data in accordance with the program,
b3) a third mode for carrying out both the compression and the decompression of the provided image data in accordance with the program.

8. An image data compression/decompression method for carrying out compression and decompression of image data by connecting a data compression/decompression board to a computer, the board carrying out the compression and the decompression of provided image data, the method comprising the steps of:
storing a program which carries out the compression and the decompression of the provided image data,
storing information which is used to select one of the board and the program for carrying out one of the compression and the decompression of the provided image data, and
carrying out one of both the compression and the decompression of the provided image data, and either the compression or the decompression of the provided image data using the program in accordance with selecting information.

9. An image data compression/decompression method for carrying out compression and decompression of image data using a computer comprising the steps of:
connecting an image data compression board carrying out the compression of the provided image data to the computer,
storing a program for carrying out the compression of the provided image data,
providing the image data to the image data compression board when input of image data for compression is detected, and
operating the computer under the compression program when input of image data for decompression is detected.

10. An image data compression/decompression method carrying out compression and decompression of image data by connecting a data compression/decompression board to a computer, the board carrying out the compression and the decompression of provided image data, the method comprising the steps of:
storing a program for carrying out the compression and the decompression of the provided image data, and
carrying out both the compression and the decompression of the provided image data, or either the compression or the decompression of the provided image data using the program.

11. A program storage medium storing a program for operating a computer connecting a data compression/decompression board performing compression and decompression of provided image data, the computer including an input device, a control device, a display device and a storing device, and the computer being activated as a system comprising following means:
A) means, storing a program for carrying out compression and the decompression of the provided image data,
B) image data compression/decompression means for carrying out the compression and the decompression of provided image data, the image data compression/decompression means capable of being switched into one of following processing modes,
b1) a first mode for carrying out both the compression and the decompression of the provided image data with the data compression/decompression board,
b2) a second mode for respectively carrying out the compression of the provided image data with the board, and the decompression of compressed data in accordance with the program,
b3) a third mode for carrying out both the compression and the decompression of the provided image data in accordance with the program, and
C) switching means for switching the image data compression/decompression means into one of the processing modes.

12. A program storage medium storing a program for operating a computer connecting a data compression/decompression board performing compression and decompression of provided image data, the computer including an input device, a control device, a display device and a storing device, and the computer being activated as a system comprising following means:
means, storing a program for carrying out the compression and the decompression of the provided image data,
means, storing setting information for determining the use of either the board or the program for carrying out the compression or the decompression of the provided image data, and
means, carrying out both the compression and the decompression of the provided image data, or either the compression or the decompression of the provided image data using the program in accordance with the setting information.

13. A program storage medium storing a program for operating a computer connecting a data compression board performing compression of provided image data, the computer including an input device, a control device, a display device and a storing device, and the computer being activated as a system comprising following means:
means, storing a program for carrying out decompression of provided image data, and
control means, providing the image data to the image data compression board when input of image data for compression is detected, and operating the computer under the decompression program when input of image data for decompression is detected.

14. A signal representative of a program for use in carrying out the method of any of claims 8 to 10.

15. A method of carrying out a process consisting of at least one of image compression and image decompression, including the step of selecting whether to use hardware or software to implement the process and implementing the selected process accordingly.
